# EUROPEAN PATENT APPLICATION

(11) **EP 2 770 706 A1**
(43) Date of publication of application: **27.08.2014**
(21) Application number: 13156432.0
(22) Date of filing: 22.02.2013
(51) Int. Cl.: H04M 1/725, G06F 9/44, G06F 3/0481

(54) **Method, apparatus and computer readable medium for providing a user interface**

(71) Applicant: BlackBerry Limited, Waterloo, ON N2K 0A7 (CA)
(72) Inventor: Rydenhag, Daniel Tobias, 413 04 Gothenburg (SE); Johansson, Per Åke Daniel, 211 40 Malmö (SE); Jorisch, Per Erik Anders, 211 40 Malmö (SE)
(74) Representative: Finnie, Peter John

(57) **Abstract**

According to one aspect of the present disclosure there is provided a method performed in an electronic device associated with an input device, the method comprising: in a first user interface state, in response to the input device receiving a user input at a first region of a graphical user interface, GUI, the first region located adjacent an edge of the GUI, transitioning to a second, different, user interface state; and, in the second user interface state, in response to the input device receiving a user input at a second region, spaced from the first region, transitioning back to the first user interface state. An electronic device and computer program product are also provided.

## Description

The present disclosure relates to electronic devices and, more particularly, the generation of a graphical user interface , GUI, using computing apparatus for displaying a user interface state and transitioning to another user interface state.

Electronic devices that use computing apparatus to provide visual information to users via one or more displays are now in ubiquitous use, for example, as portable electronic devices in the form of handheld computers, smart phones, tablet computers, and laptop computers, and as non-portable electronic devices in the form of desktop computers or smart televisions. The display or displays that provide visual information from the electronic devices to the users may be separable from and coupleable to the electronic devices, or may be integrated therewith.

The electronic devices may generate user interfaces for display on the display coupled to the device for facilitating user interaction with, and operation of, the device via one or more user inputs. The user interfaces comprise visual elements that can be arranged in various manners on the screen. The visual elements provided in the user interface may together represent elements of, for example, an operating system of the electronic device and applications supported thereby. Indirect interaction, typically by pointer-based user inputs such as trackpads, trackballs, mice and cursors, and direct interaction, typically by touch-based user inputs such as touch screens and multitouch screens, can provide controls usable to allow interaction with the user interface. User interfaces having a desktop environment that include windows, icons, menus and a pointer as visual elements are known whereas user interfaces having a more touch-friendly paradigm may also be provided. Touch-based mobile devices may include both touch-friendly and desktop environment user interfaces between which a user may alternate, if, for example, an external keyboard, mouse and display are connected to convert the touch-screen mobile device into a more conventional computer implementation.

Portable electronic devices such as smartphones and tablet devices are becoming increasingly widespread and the technology and processing capabilities of these devices are dramatically improving. As the technology and processing capabilities of portable devices improves, smartphones and personal computers are converging. For example, operations which were previously only possible on personal computers can now be easily performed on portable devices. Portable devices are now capable of operating as personal computers when connected to conventional input and output devices such as a keyboard, mouse and monitor.

In typical portable device user interfaces certain touches or combinations of touches on the touch input devices are recognised as gestures that lead to certain manipulations or operations of the GUI or of the information presented on the display screen. By performing certain gestures on the input detectable area, a user can interact with the GUI and control the applications and operating system of the electronic device. User Interfaces typically utilise gestures to provide quick and easy input to the device. However, these gestures do not typically translate to conventional input means such as keyboard and mouse. As such, when portable devices are connected to these input means the user interface of the portable device may not be suitable. Additionally, when connected in this manner, the user interface may change to a mix of touch based input and keyboard/mouse based input because input to the touch screen is still possible as well as input to the keyboard and mouse.

Touch gestures are useful shortcuts on a touch screen and save time, but moving to an environment which mixes the user interface of a touch device with a user interface using a screen and mouse does not have an equivalent way to save time in navigating through the user interface.

Examples of the present proposed approach will now be described in detail with reference to the accompanying drawings, in which:
**Figure 1** is a block diagram illustrating an electronic device in accordance with example embodiments of the present disclosure;
**Figure 2** is a front view of a phone in accordance with example embodiments of the present disclosure;
**Figure 3** is a front view of a tablet computer is accordance with example embodiments of the present disclosure;
**Figure 4** is a schematic diagram of a phone connected to an external display and wirelessly connected to physical input means;
**Figure 5** shows zones of a graphical user interface in accordance with the present disclosure;
**Figure 6** shows a graphical user interface in accordance with the present disclosure; and,
**Figure 7** shows zones of a graphical user interface in accordance with the present disclosure overlaying a graphical user interface in accordance with the present disclosure.

In accordance with one aspect of the present disclosure there is provided a method performed in an electronic device associated with an input device, the method comprising: in a first user interface state, in response to the input device receiving a user input at a first region of a graphical user interface, GUI, the first region located adjacent an edge of the GUI, transitioning to a second, different, user interface state; and, in the second user interface state, in response to the input device receiving a user input at a second region, spaced from the first region, transitioning back to the first user interface state.

In accordance with another aspect of the present disclosure, an electronic device associated with an input device may be provided, the electronic device comprising: one or more processors; and, memory comprising instructions which, when executed by one or more of the processors, cause the electronic device to: in a first user interface state, in response to the input device receiving a user input at a first region of a graphical user interface, GUI, the first region located adjacent an edge of the GUI, transition to a second, different, user interface state; and, in the second user interface state, in response to the input device receiving a user input at a second region, spaced from the first region, transition back to the first user interface state.

In accordance with another aspect of the present disclosure, a computer program product may be provided comprising memory comprising instructions which when executed by one or more of the processors of an electronic device associated with an input device cause the electronic device to: in a first user interface state, in response to the input device receiving a user input at a first region of a graphical user interface, GUI, the first region located adjacent an edge of the GUI, transition to a second, different, user interface state; and, in the second user interface state, in response to the input device receiving a user input at a second region, spaced from the first region, transition back to the first user interface state.

The graphical user interface may be displayed on an external display connected to the electronic device different from a display of the electronic device. The second user interface state may display a list of currently running applications. The list of currently running applications may be displayed in order of most recent usage. The second user interface state may display one or more communication notifications. The one or more communication notifications and the list of currently running applications may be displayed in different regions of the GUI. The first user interface state may display a full-screen application. The second user interface state may reduce the displayed size of the full-screen application. The second region may be located adjacent the opposing edge of the GUI from the first region. The first region may be located adjacent to a corner of the GUI. The first and second regions may be of different sizes. The second region may be larger than first region.

The input device is a touchscreen, a pointer device, a camera tracking system, a voice activated pointer system or a trackpad. The electronic device may be configured such that actuation of the input device translates to movement of a pointer on the graphical user interface, wherein the step of receiving a user input at a region of the GUI comprises movement of the pointer into the region of the GUI.

The second user interface state may display one or more communication notifications and a list of currently running applications.

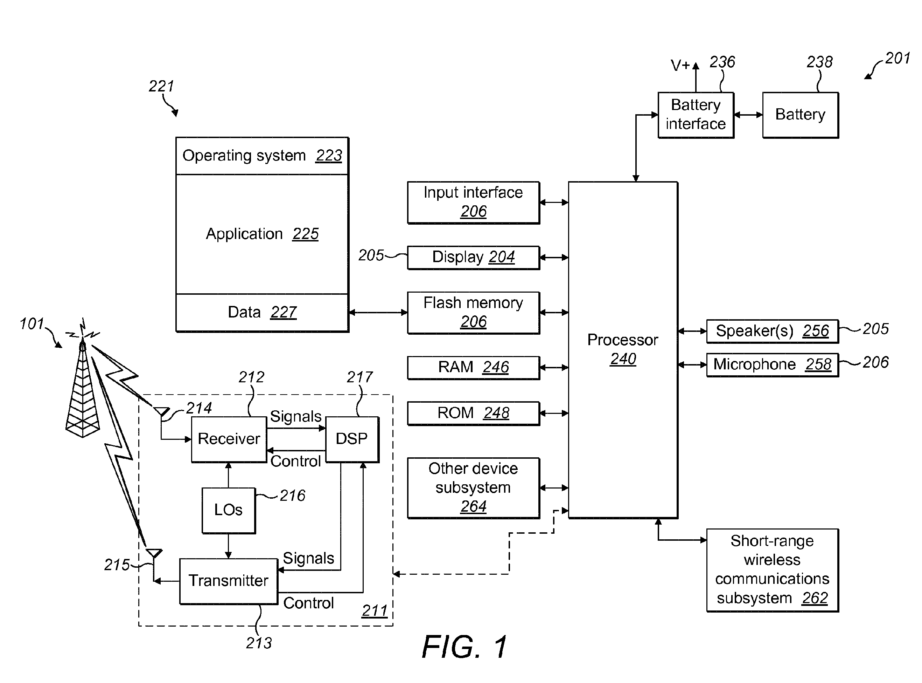

Reference will now be made to Figure 1 which illustrates an electronic device 201 in which example embodiments described in the present disclosure can be applied.

In the illustrated example embodiment, the electronic device 201 is a communication device and, more particularly, is a mobile communication device having data and voice communication capabilities, and the capability to communicate with other computer systems; for example, via the Internet.

Depending on the functionality provided by the electronic device 201, in various example embodiments the electronic device 201 may be a multiple-mode communication device configured for both data and voice communication, a mobile telephone, such as a phone, a wearable computer such as a watch, a tablet computer such as a slate computer, a personal digital assistant (PDA), or a computer system. The electronic device 201 may take other forms apart from those specifically listed above. The electronic device may also be referred to as a mobile communications device, a communication device, a mobile device and, in some cases, as a device.

The electronic device 201 includes a controller including one or more processors 240 (such as a microprocessor) which controls the overall operation of the electronic device 201. The processor 240 interacts with device subsystems such as a wireless communication subsystem 211 for exchanging radio frequency signals with a wireless network 101 to perform communication functions. The processor 240 is communicably coupled with additional device subsystems including one or more output interfaces 205 (such as a display 204 and/or a speaker 256 and/or a video output port (not shown) for coupling the device to an external display (not shown)), one or more input interfaces 206 (such as microphone 258, keyboard (not shown), control buttons (not shown), and/or a touch-sensitive overlay (not shown) associated with a touchscreen display 204), memory (such as random access memory (RAM) 246, read only memory (ROM) 248, etc.), a short-range wireless communication subsystem 262 and other device subsystems generally designated as 264.

In at least some example embodiments, the electronic device 201 may include a touchscreen display which acts as both an input interface 206 (i.e. touch-sensitive overlay) and an output interface 205 (i.e. display). The touchscreen display may be constructed using a touch-sensitive input surface which is connected to an electronic controller and which overlays the display 204. The touch-sensitive overlay and the electronic controller provide a touch-sensitive input interface 206 and the processor 240 interacts with the touch-sensitive overlay via the electronic controller. in some example embodiments, the electronic device may be equipped in an active frame. A frame is a portion of the housing of the electronic device which frames the display of the electronic device. An active frame is a frame which has a touch sensitive overlay which allows the electronic device to detect a touch applied to the frame. An active frame may be useful in detecting large swiping gestures.

As noted above, in some example embodiments, the electronic device 201 may include a communication subsystem 211 which allows the electronic device 201 to communicate over a wireless network 101 (and/or via a wired link (not shown)). The communication subsystem 211 includes a receiver 212, a transmitter 213, and associated components, such as one or more antenna elements 214 and 215, local oscillators (LOs) 216, and a processing module such as a digital signal processor (DSP) 217. The antenna elements 214 and 215 may be embedded or internal to the electronic device 201 and a single antenna may be shared by both receiver and transmitter. The particular design of the wireless communication subsystem 211 depends on the wireless network 101 in which electronic device 201 is intended to operate. The wireless network 101 may, for example, be a cellular (such as GSM, GPRS, CDMA and EDGE) and/or a non-cellular network (for example local WiFi networks).

In at least some example embodiments, the electronic device 201 may communicate with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 214 through the wireless network 101 are input to the receiver 212 and are demodulated and decoded by the Digital Signal Processor (DSP) 217. In a similar manner, signals to be transmitted are processed, including modulation and encoding, for example, by the DSP 217 and are input to the transmitter 213 for transmission to the wireless network 101 via the antenna 215. The DSP 17 not only processes communication signals, but may also provide for receiver and transmitter control. For example, the gains applied to communication signals in the receiver 212 and the transmitter 213 may be adaptively controlled through automatic gain control algorithms implemented in the DSP 217.

The electronic device 201 also includes a battery 238 as a power source, which is typically one or more rechargeable batteries that may be charged for example, through charging circuitry coupled to a battery interface 236 such as the data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The electronic device 201 stores data 227 in an erasable persistent memory, which in one example embodiment is the flash memory 244. In various example embodiments, the data 227 includes service data including information required by the electronic device 201 to establish and maintain communication with the wireless network 101. The data 227 may also include user application data such as email messages, address book and contact information, calendar and schedule information, notepad documents, image files, and other commonly stored user information stored on the electronic device 201 by its user, and other data. The data 227 stored in the persistent memory of the electronic device 201 may be organized, at least partially, into one or more databases or data stores. The databases or data stores may contain data items of the same data type or associated with the same application. For example, email messages, contact records, and task items may be stored in individual databases within the device memory.

The electronic device 201 may, in some example embodiments, be operable to achieve data communication, such as to receive an email message stored in a repository of email messages of a user of the device that is stored locally to the device or remotely at another device, or to download a Web page. The received data will be processed by the communication subsystem 211 and input to the processor 240 for further processing. For example, a downloaded Web page may be further processed by a browser application or an email message may be processed by an email messaging application and output to the display 204. A user of the electronic device 201 may also compose data items, such as email messages; for example, using the input devices in conjunction with the display 204. These composed items may be transmitted through the communication subsystem 211 over the wireless network 101.

The processor 240 operates under stored program control and executes software modules 221 stored in memory such as persistent memory; for example, in the flash memory 244. As illustrated in Figure 1, the software modules 221 include operating system software 223 and other software applications 225.

The user interface in accordance with the present disclosure may be provided as a computer software product. The computer software product may be provided in, on or supported by a computer readable medium which could be provided as all possible permanent and non-permanent forms of computer readable medium either transitory in nature, such as in a data transmission signal for example sent over the internet, or non-transitory in nature such as in the RAM 246 of the device 201 or other, non-volatile storage such as memory 230. On the other hand the computer readable medium may be a non-transitory computer readable medium comprising all computer-readable media, with the sole exception being a transitory, propagating signal.

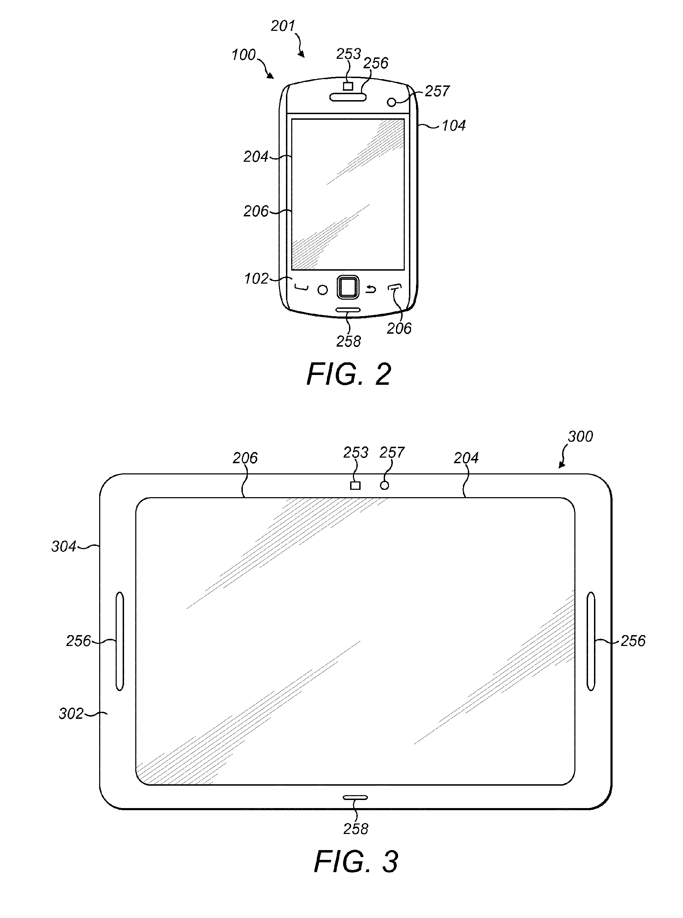

Referring now to Figure 2, the electronic device 201 could be a smart phone 100 which may have the ability to run third party applications which are stored on the phone and may include the components discussed above with reference to Figure 1 or a subset of those components.

Referring now to Figure 3, a front view of another example of an electronic device 201, a tablet computer 300, is illustrated. The tablet computer 300 may include many of the same features and components of the phone 100 of Figure 2. However, the tablet computer 300 of Figure 3 is generally larger than the phone 100. The tablet computer 300 may include the components discussed above with reference to Figure 1 or a subset of those components.

In embodiments, the smart phone 100 and tablet computer 300 are provided with an operating system having a touch-friendly user-interface which primarily uses touch-based gesture input from the touch screen to control the device. In addition, the smart phone 100 and tablet computer 300 may also be provided a more conventional desktop environment user-interface. A user may select the desktop environment user interface to control the device, for example, using primarily pointer-based gestures received from an external mouse and keyboard connected wirelessly via short-range wireless communication subsystem 262. In addition, the smart phone 100 and tablet computer 300 may be coupled to external displays, such as TFT monitors via video output ports. In this way, the mobile electronic devices may be converted for use as more conventional desktop electronic devices.

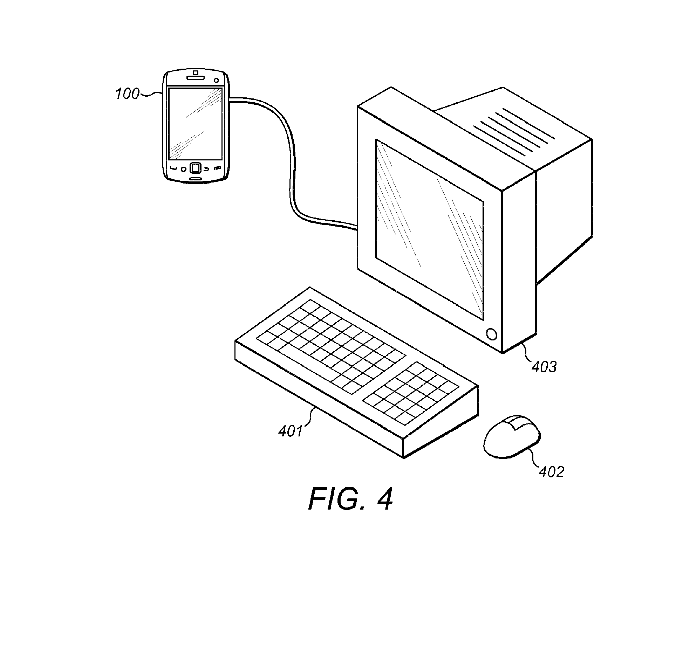

A connected set-up such as that described above is depicted in Figure 4. A smart phone 100 is connected wirelessly to a keyboard 401 and a mouse 402. The smartphone 100 is connected to an external display 403, for example using an HDMI connection. The external display could also be connected wirelessly using known short-range wireless techniques. In some embodiments, when the smart phone is connected to a mouse and display in this manner, the portable device may fully enter a desktop user interface environment. Alternatively, the device may utilise the same user interface used when not connected, i.e. a mobile user interface, or may utilise a mixed user interface including features of both the mobile and desktop user interfaces and most likely accepting both mouse and touch inputs.

The smart phone touch sensitive area may still be operable when connected in this manner to accept input. Additionally, the external display may have touch sensitive capabilities and may provide an additional input device.

As described above, the portable device may present different user interfaces. In a smart phone user interface, typically an open application will expand to fill the entire visible screen dimensions. Switching between the open application and other running applications can be effected using a gesture or an external physical button if available. For example, a swipe gesture beginning off the screen on the active frame and finishing at the bottom of the visible area may result in the user interface returning to a home screen of the user interface where the user is presented with a list of available application to choose from. A different gesture may display a list of currently running applications, or a set of communication options or notifications for the user to view and select.

In a desktop user interface typically a taskbar is provided to enable the user to switch between applications. A taskbar is a bar displayed on a full edge of a graphical user interface desktop that is used to launch and monitor running applications. In some user interfaces, a button on the taskbar enables the user to view a list of available applications. In some desktop user interfaces, active or hot corners are used to quickly enable the user to show a different user interface state, such as a widget view. A pointer is moved into the corner of the display area to invoke a different user interface state such as a view of currently running 'widgets' or to return to the desktop view to select further applications. Conventionally, one or more further selections are required to return the user to the running application or previous user interface state once the active or hot corner is invoked.

In environments which mix the user interface of a touch device with the user interface using a screen and mouse, there is no easy way of saving time in navigating through the user interface. For example, when an application expands to fill the full width of a screen there is no easily displayed visual element to select with the mouse to change user interface state, for example to switch to another running application. The gestures previously used to effect changes in the user interface do not translate easily to mouse input. For example, to effect a swipe gesture to return to a home screen, the user would have to click the mouse (perhaps on an inactive area of the display) and then move the mouse before releasing the mouse button. This is not feasible as an effective method of entering a gesture. There are many other gestures that simply cannot be entered using a mouse or other physical input means.

In accordance with the present disclosure, there is provided a user interface which allows for a user to quickly, easily and reversibly switch to running applications and see notifications without requiring precise input.

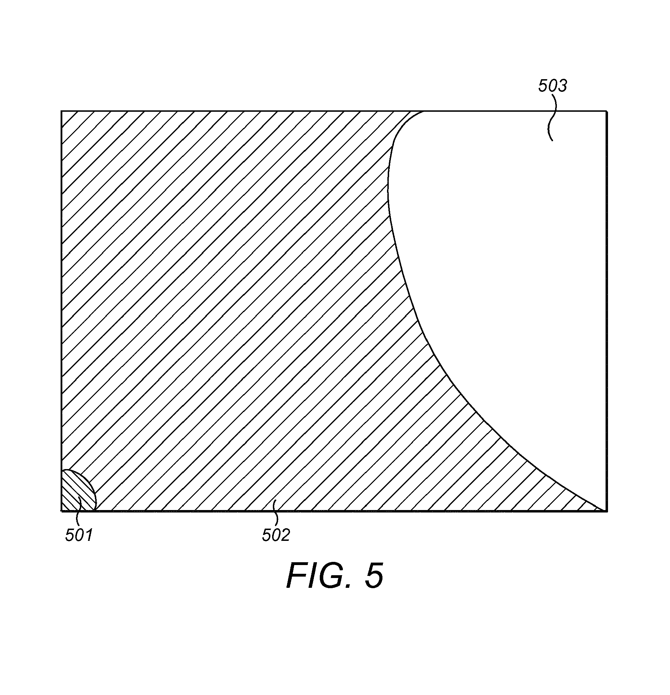

Referring now to Figure 5, in accordance with the present disclosure there are provided one or more active zones 501 on the user interface which are activated by movement of the mouse, pointer or other input means into those zones. Preferably the zones are placed in the corners of the display so as to not interfere with normal operation of the user interface. The zones are fast, global and can be performed 'sloppy' with little precision, providing similar advantages to some aspects of touch gestures.

In a specific example, when the user moves the mouse, the movement of the mouse translates to movement of a pointer or cursor on the user interface. If a full screen application is running at the time the mouse is moved, when the pointer is moved over an active zone the user interface transitions into another user interface state.

As described above, the active zones may preferably be placed at one or more corners of the visual area. Additionally the zones may be placed otherwise adjacent the edges of the visible area so that they do not interfere with normal use of the user interface. The active zone may for example be positioned at the bottom centre of the visible area.

Figure 5 illustrates an active zone 501 positioned in the bottom left corner of the displayed area. There may of course be multiple active zones on the same visual area, for example there may be one active zone in each corner of the display that activates the same or different user interface actions.

As mentioned above, as well as moving a mouse to effect movement of a pointer over an active zone other input means may be used such as voice, camera tracking systems, accelerometers or touch pads. These input means typically translate detected input into movement of a pointer on the user interface. When the pointer is moved into an active zone on the user interface the change in state is invoked.

In other embodiments, certain gestures may be used to effect the transition between states. For example, a swipe gesture may start on the active frame of a touch screen device and finish in or pass through the active zone such that the user interface transitions into the second state. The start and finish destinations may of course be reversed, i.e. the gesture may originate in the corner and extend outwards or inwards to invoke the change in user interface state.

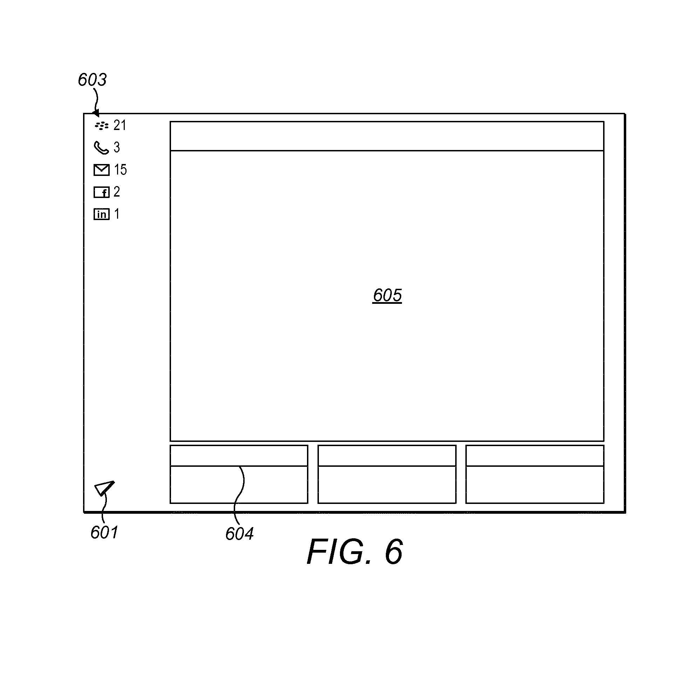

In accordance with the present disclosure, a number of user interface actions may occur when a zone is activated. An exemplary altered user interface state is illustrated in Figure 6. In this illustration, the user interface was previously displaying a full screen running application and the user moved the pointer 601 into an active zone positioned in the bottom left hand corner of the display area.

In a preferred embodiment, the size of the running application 605 will be reduced to allow for other visual elements to be displayed. In the newly available display area, a list of running applications 604 may be shown so that the user can select another application. These may be displayed in most recent order, with the most recently opened application closest to the active zone on the interface. In this way the user can quickly and easily switch to the most recently opened application.

In this user interface state, the user may also be provided with a series of notifications 603 so that by activating this user interface state the user can quickly and easily see any notifications that the user interface may have generated. The notifications may for example be receipt of data communications such as those described above. Other user interface states or visual elements that could be invoked when a zone is activated include communication shortcuts and a home screen showing available applications or widgets. Any combination of the above user interfaces can of course be provided once a zone is activated.

By activating one of the zones provided on the user interface the user can easily see any notifications 603, can select any running applications 604 and may also be able to see the state of application 605 that was running before the zone was activated.

As illustrated in Figure 5, to reverse to the previous user interface state a threshold or reverse zone 503 may be provided. For example, once the zone has been activated and the visual elements shown in Figure 6 are displayed, movement of the mouse to the opposing side of the display will return the user interface to the previous state. No further selection is necessary. In this way the user interface can reversibly transition to a notification or application selector state easily with little precision. The invoked state is made more effectively reversible by making the active zone 501 small and the reverse zone 503 large and positioning the reverse zone 503 on the opposing side of the visual area. The user may thus see the reversal action required as a movement of the input device back towards the middle of the display.

In a preferred embodiment, the threshold or reverse zone 503 may be sized and positioned so that the elements on the interface can be selected without returning to the previous state. Additionally, the reverse zone 503 is separated from and optionally spaced apart from the active zone by a space 502, as illustrated in Figure 5. In this way the notifications and applications displayed in the invoked user interface state can be selected quickly and easily without reverting to the previous state accidentally.

Optionally, a gesture at the reverse zone may be used to revert to the previous state. For example, a swipe gesture starting off the screen and finishing in the opposing corner of the displayed area may be used. As before, the gesture may of course be reversed.

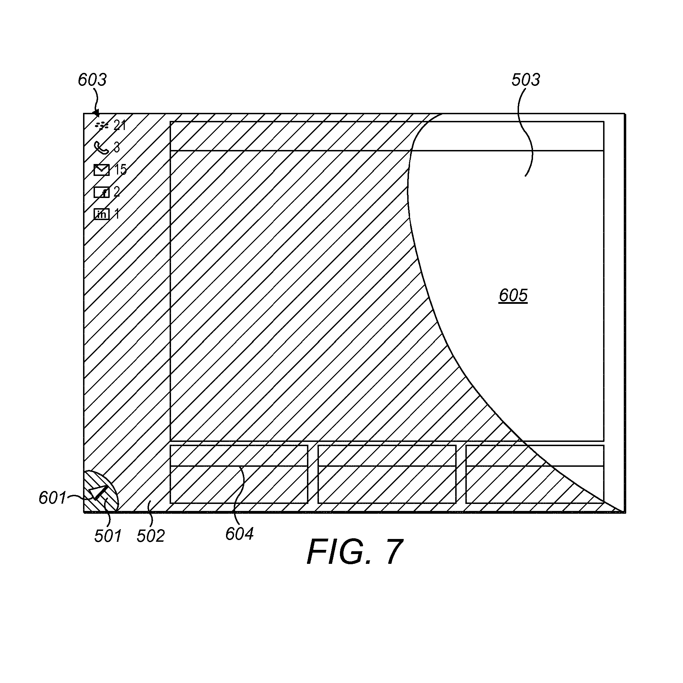

Figure 7 illustrates an overlay of the active zones on the invoked user interface state. The user interface state in this example has been invoked by movement of the pointer into the bottom left corner active zone. As will be seen, the user can move the pointed to the notification area 603 or the list of running applications 604 in order to make a selection. In order to revert to the previous state, in this case reverting to the previously running application, the user moves the pointer to the opposing corner of the display area and into the reverse zone 503. When this movement is detected, the previously running application is displayed.

The present disclosure also provides an electronic device comprising: a processor; and memory comprising instructions which when executed by the electronic device to carry out the method of any of the embodiments set out above.

The present disclosure also provides computer-readable medium comprising instructions capable of causing an electronic device including a processor to carry out the method of any of the embodiments set out above.

## Claims

1. A method performed in an electronic device associated with an input device, the method comprising:
in a first user interface state, in response to the input device receiving a user input at a first region of a graphical user interface, GUI, the first region located adjacent an edge of the GUI, transitioning to a second, different, user interface state; and,
in the second user interface state, in response to the input device receiving a user input at a second region, spaced from the first region, transitioning back to the first user interface state.

2. The method according to claim 1, wherein the graphical user interface is displayed on an external display connected to the electronic device different from a display of the electronic device.

3. The method according to claim 1 or 2, wherein the second user interface state displays a list of currently running applications.

4. The method according to claim 3, wherein the list of currently running applications is displayed in order of most recent usage.

5. The method according to any preceding claim, wherein the second user interface state displays one or more communication notifications.

6. The method according to claim 5 when dependent on claim 3 or 4, wherein the one or more communication notifications and the list of currently running applications are displayed in different regions of the GUI.

7. The method according to any preceding claim, wherein the first user interface state displays a full-screen application.

8. The method according to any preceding claim, wherein the second user interface state reduces the displayed size of the full-screen application.

9. The method according to any preceding claim, wherein the second region is located adjacent the opposing edge of the GUI from the first region.

10. The method according to any preceding claim, wherein the first region is located adjacent to a corner of the GUI.

11. The method according to any preceding claim, wherein the first and second regions are of different sizes.

12. The method according to claim 11, wherein the second region is larger than first region

13. The method according to any preceding claim, wherein the input device is a touchscreen, a pointer device, a camera tracking system, a voice activated pointer system or a trackpad.

14. The method according to any preceding claim, wherein the electronic device is configured such that actuation of the input device translates to movement of a pointer on the graphical user interface, wherein the step of receiving a user input at a region of the GUI comprises movement of the pointer into the region of the GUI.

15. An electronic device associated with an input device, the electronic device comprising:
one or more processors; and,
memory comprising instructions which, when executed by one or more of the processors, cause the electronic device to carry out the method of any of claims 1 to 14.

16. A computer program product comprising memory comprising instructions which when executed by one or more of the processors of an electronic device associated with an input device cause the electronic device to carry out the method of any of claims 1 to 14.
